(19) Europäisches Patentamt
European Patent Office
Office européen des brevets

(11) **EP 3 754 538 A1**

(12) **EUROPEAN PATENT APPLICATION**

(43) Date of publication:
**23.12.2020 Bulletin 2020/52**

(51) Int Cl.:
***G06K 9/00*** *(2006.01)*          ***G06K 9/62*** *(2006.01)*

(21) Application number: **19305769.2**

(22) Date of filing: **17.06.2019**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN** | (72) Inventor: **Duheille, Remi**<br>**92500 Rueil Malmaison (FR)**<br><br>(74) Representative: **Grünecker Patent- und Rechtsanwälte**<br>**PartG mbB**<br>**Leopoldstraße 4**<br>**80802 München (DE)** |
| (71) Applicant: **Interel Pte. Ltd.**<br>**Singapore 049910 (SG)** | |

(54) **DETECTION OF DOOR OPENING AND CLOSING EVENTS**

(57)     The present invention relates to an apparatus for monitoring a door opening or closing event or a door unlocking or locking event of a door of a room, comprising a sensor device configured for detecting vibrations in the room and outputting a sensor signal based on the detected vibrations and a processing unit configured for a) processing the sensor signal output by the sensor device comprising extracting a pattern from the sensor signal and b) identifying the door opening or closing event based on the extracted pattern.

Figure 3

**Description**

**Field of Invention**

The present invention relates to the detection of an opening or closing of a door of a room and, in particular, to the detection of an opening or closing of a door of a room based on sensed vibrations in the room.

**Background of the invention**

The detection of an opening or closing of a door of a room and connected therewith the presence or absence of a person in the room is a task in different applications, for example, security or energy saving application. Various types of sensors for detecting opening/closing of doors are known including switch-type, optical-type and infrared type sensors. All of these sensors known in the art are subjected to a certain limitation.

For example, passive infrared sensors cannot reliably work based on absolute variations of wanted signals and, therefore, usually the absence of a person only rather than the presence of the same is detected. Despite recent engineering progress detection based on pressure and audio signals detected by microphones, for example, suffers from false detection events caused by an insufficient sensitivity of the acoustic/pressure sensor (for example, microphone) used.

Therefore, it is an object of the present invention to provide means for the detection of an opening or closing of a door of a room with increased accuracy as compared to the art.

**Description of the Invention**

The present invention addresses the above-mentioned problem by providing an apparatus and method for monitoring the opening and closing of a door of a room based on the detection of vibrations in the room, particularly, of air in the room, as specified in the independent claims. It is to be understood that herein door opening and closing events comprise events of actuating, i.e., unlocking and locking, the lock of a door without necessarily moving the door itself as well as events of moving the door for opening or closing the same.

It is provided an apparatus for monitoring a door opening or closing event of a door of a room (or monitoring unlocking or locking of a lock of the door), comprising a sensor device configured for detecting vibrations in the room (for example, in the air contained in the room) and outputting a sensor signal based on the detected vibrations and a processing unit configured for a) processing the sensor signal output by the sensor device comprising extracting/determining a pattern from the sensor signal and b) identifying the door opening or closing event (or unlocking or locking of a lock of the door) based on the extracted/determined pattern (for example, a temporal evolution of the determined pattern).

It has to be noted that no additional external sensors such as ceiling mounted motion sensors to detect door opening are needed and, thus, additional wiring or battery replacement (almost mandatory for every external sensors used in the art) can be avoided. Furthermore, no specific orientation inside the room is needed for the sensor device employed according to the present invention.

The sensor device may be or comprise a microphone, micro-electromechanical system (MEMS) or accelerometer, for example. Particularly, during the identification process carried out by the processing unit the extracted pattern may be compared to one or more reference patterns stored in a memory, for example, a memory of the apparatus. The pattern may be based on a feature analysis, i.e., the pattern may be a pattern of particular features of a waveform of the sensor signal detected by the sensor device. For example, the feature can be the magnitude or the energy of the sensor signal. Particularly, in the context of identifying an unlocking/locking event the feature (vector) may be represented by or derived from MEL frequencies and a pattern can be determined in a MEL cepstrum. A pattern of the feature can be compared to reference patterns (known to represent door opening/closing or unlock/locking events) in order to identify an event.

Particularly, the processing unit may be configured to discriminate between vibrations caused by a door opening/closing/unlocking/locking event and vibrations caused by human activities. On the other, in order to keep privacy it is not desirable that the sensor device recognizes particular kinds of human activities. In order to deal with these conditions the processing unit may be configured to identify relatively strong signals at relatively high frequencies. In this context, MEL frequencies may be employed at a first processing stage for continuous frequencies and, at a second processing stage, non-contiguous frequencies are combined to determine whether the detected signal corresponds to a metallic sound that might be caused by a door lock.

Thus, the processing unit may be configured to determine another pattern from the sensor signal, the other pattern comprising wavelet envelopes and the processing unit may be configured for identifying the i) door opening or closing event or ii) door unlocking or locking event based on both the extracted pattern and the other pattern comprising wavelet envelopes.

According to an embodiment an artificial neural network is implanted in the processing unit and the processing unit is configured to identify the i) door opening or closing event or ii) door unlocking or locking event by means of the artificial neural network, for example, one of a Deep Neural Network, Convolutional Neural Network, Basic Long Short-Term Memory Network, Long Short-Term Memory Network, Gated Recurrent Unit Network, Convolutional Recurrent Neural Network and Depthwise Separable Convolutional Neural Network. The Depthwise Separable Convolutional Neural Network may provide the highest reliability/accuracy of detecting events. The artificial neural network may also be used during the process of determining the pattern. The processing unit may be realized in form of or may comprise a microcontroller (having a relatively low power consumption) wherein the artificial neural network is implemented. The artificial neural network can advantageously be used for training and learning to facilitate event identification. The above-mentioned reference patterns may at least partially be obtained by employment of the artificial neural network during a training phase.

According to an embodiment the apparatus comprises a pre-processing unit configured for pre-processing the sensor signal by filtering and amplifying the sensor signal before processing it by the processing unit. By the filtering process frequency components that are not useful for the event identification can be excised thereby reducing the computational load of the processing unit. Moreover, sensor signals exhibiting signal strengths below some predetermined threshold may be rejected by the pre-processing unit and, thus, not transmitted to the processing unit.

The pre-processing unit may be further configured for transforming the sensor signal into the frequency domain, in particular, by means of a (Fast) Discrete Fourier Transform such that processing of the sensor signal by the processing unit is performed in the frequency domain.

According to an embodiment in order to determine the pattern the processing unit is configured to process the sensor signal by convolution using erosion filtering/patches. The thus obtained convoluted signal can be advantageously used for the pattern determination process.

Furthermore, it is provided a method of monitoring i) a door opening or closing event or ii) a door unlocking or locking event of a door of a room, comprising

detecting vibrations in the room by means of a sensor device, in particular, a microphone, accelerometer or micro-electromechanical system, to obtain a sensor signal; and

processing the sensor signal by a processing unit to identify i) a door opening or closing event or ii) a door unlocking or locking event; wherein

processing the sensor signal comprises extracting features from the sensor signal and determining/extracting a pattern of the sensor signal (for example, a pattern of features as, for example, signal magnitudes, signal energies or MEL spectrum components) based on the extracted features and wherein the i) door opening or closing event or ii) door unlocking or locking event is identified based on the determined/extracted pattern, in particular, by comparing the determined pattern with one or more reference patterns (for each of the door opening, closing, unlocking, locking event different reference patterns are provided) that are stored beforehand. The similarity of the determined pattern to a reference pattern may be determined based on some similarity measure and an event may be identified, if the determined similarity measure exceeds a predetermined threshold.

In this method identification of i) a door opening or closing event or ii) a door unlocking or locking event may be based on a temporal evolution of the determined pattern. The pattern may be determined based on features resulting from a feature analysis of the sensor signal. Exemplary features are signal magnitudes, energies, and MEL frequencies.

The method may further comprise determining another pattern from the sensor signal, the other pattern comprising wavelet envelopes and identifying the i) door opening or closing event or ii) door unlocking or locking event may be based on the extracted pattern and the other pattern.

The i) door opening or closing event or ii) door unlocking or locking event may be identified by means of an artificial neural network, in particular, one of a Deep Neural Network, Convolutional Neural Network, Basic Long Short-Term Memory Network, Long Short-Term Memory Network, Gated Recurrent Unit Network, Convolutional Recurrent Neural Network and Depthwise Separable Convolutional Neural Network. The artificial neural network may also be used during the process of determining the pattern.

According to an embodiment the method further comprises filtering and amplifying the sensor signal before processing it by the processing unit. Signals with a magnitude below some predetermined threshold may be rejected before further processing them. Moreover, the method may comprise transforming the sensor signal into the frequency domain, in particular, by means of a Discrete Fourier Transform before the further processing performed in order to determine a pattern and identify an event based on the determined pattern.

The method may further comprise processing the sensor signal by convolution using erosion filtering/patches before identifying the i) door opening or closing event or ii) door unlocking or locking event based on the extracted pattern.

The steps of the method according to one of the above-mentioned embodiments may only be performed, if a predetermined operation condition is satisfied, wherein the predetermined operation condition is particularly based an allocation of the room. Thereby, power consumption can be saved and lifetime of the employed apparatus can be increased by postponing operation until it is necessary according to the allocation of the room, for example, a room of a hotel. The above-described embodiments of the apparatus may accordingly be connected to some scheduling/property management system that can provide information whether the operation condition is satisfied.

All of the above-mentioned embodiments of the method of monitoring i) a door opening or closing event or ii) a door unlocking or locking event of a door of a room can be implemented in one of the embodiment of the apparatus for monitoring a door opening or closing event of a door of a room (or monitoring unlocking or locking of a lock of the door) as described above.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1 illustrates an apparatus for monitoring the opening/closing of a door of a room in accordance with an embodiment of the present invention.

Figure 2 represents a flow chart illustrating a method of monitoring the opening/closing of a door of a room in accordance with an embodiment of the present invention.

Figure 3 illustrates employment of an artificial neural network for learning the correct identification of a door opening/closing event.

Figure 4 shows an exemplary configuration of a sensor device

Herein, an apparatus for and a method of monitoring the opening and closing of a door of a room based on the detection of vibrations in the room are provided. The detected vibrations may be vibrations of air in the room. Alternatively, the vibrations may be vibrations of a wall, ceiling or floor of the room or an object adhered to the wall, ceiling or floor of the room or the vibrations may be vibrations of the door. In principle, the room can be a room of a building, in particular, a hotel, or a vehicular compartment, for example. Door opening and closing events comprise unlocking and locking events of locks of doors without necessarily moving the doors themselves. In particular, the activation/actuation of a lock of the door from outside or inside of the room or activation of the lock by some authentication means as a key or a card may be monitored. Detection of door opening/closing events, and thus the presence or absence of a person, can be used for energy saving purposes, for example, in applications in hotels wherein the light, air conditioning, etc. may be switched off, if it is determined that no person is present in the room.

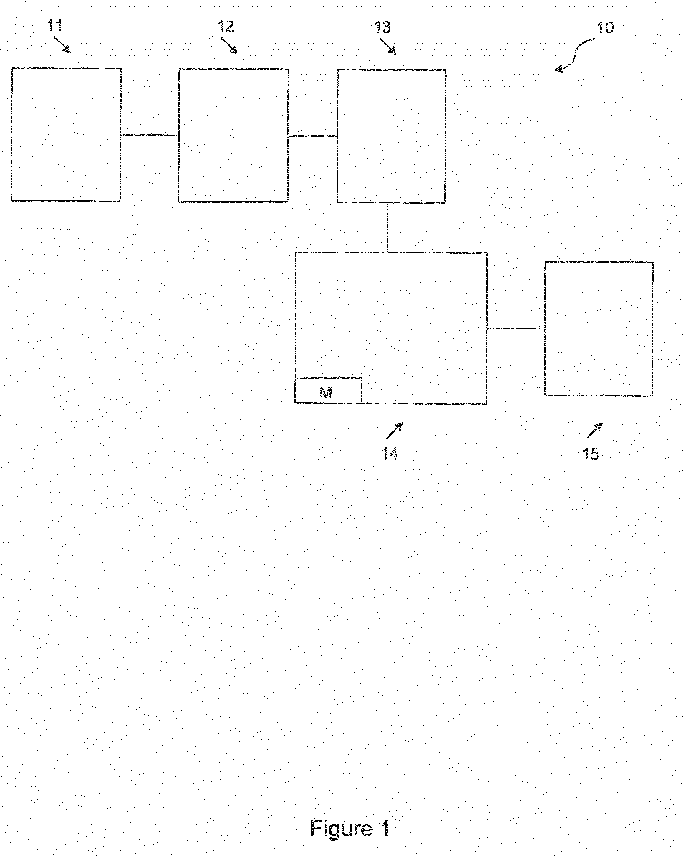

An exemplary embodiment of an apparatus 10 for monitoring the opening and closing of a room of a door is schematically illustrated in Figure 1.

The apparatus 1 comprises a sensor device 11 for detecting vibrations of air in the room that are caused by the opening/closing of the door. The sensor means 11 can be or comprise, for example, a microphone, a micro-electromechanical system (MEMS) fabricated using integrated circuit (IC) batch processing techniques ranging in size from a few micrometers to millimeters, or accelerometer. The MEMS may have the ability to sense, control and actuate on the micro scale, and generate effects on the macro scale and may consist of or comprise mechanical microstructures, microsensors, microactuators and/or microelectronics, all integrated onto the same silicon chip.

The accelerometer may measure dynamic acceleration as a voltage and may rely on the use of the piezoelectric effect, which occurs when a voltage is generated across certain types of crystals as they are stressed. Piezoelectric or charge mode accelerometers require an external amplifier or inline charge converter to amplify the generated charge, lower the output impedance for compatibility with measurement devices, and minimize susceptibility to external noise sources and crosstalk. The charge-sensitive amplifier may be built inside the accelerometer. Sensitivity is one of the most important parameters for accelerometers. Sensitivity describes the conversion between vibration and voltage at a reference frequency, such as 160 Hz. Sensitivity is specified in mV per G. If typical accelerometer sensitivity is 100 mV/G and you measure a 10 G signal, you expect a 1000 mV or 1 V output. The exact sensitivity is determined from calibration and usually listed in the calibration certificate shipped with the sensor. Sensitivity is also frequency dependent. A full calibration across the usable frequency range is required to determine how sensitivity varies with frequency. Slow accelerometers having sampling rates of about 600 to 1000 kHz or fast accelerometers with sampling rates of about 3000 to 6000 kHz may be suitably employed.

The signals provided by the sensor device 11 are pre-processed by a pre-processing unit 12. The pre-processing unit 12 may comprise a filter means configured for eliminating signal/frequency components that are not useful for the determination of a door opening/closing event. The filter means may comprise a high pass filter and/or a low pass filter, for example, to focus on low-frequency wanted signals with frequencies below some 10 Hz and high-frequency wanted signals with frequencies above some 5 KHz, respectively. In particular, the filter means may configured for noise reduction in order to obtain improved wanted signals. The pre-processing unit 12 may further comprise an amplifier. Signals filtered by the filter means of the pre-processing unit 12 are amplified by the amplifier. Further, the apparatus 10 includes an A/D converter 13 in order to obtain digital signals that are input in a processing unit 14.

The processing unit 14 may comprise a microcontroller and it may comprise or be connected to a memory M used for the processing of the received (detected, filtered, amplified and digitized) signals. Microcontrollers are advantageous with respect to low power consumption in (almost) always-on operation and space-saving compactness. The processing unit 14 is configured for generating a time-frequency image of a signal. For example, a signal may be subject to a (Fast) Discrete Fourier Transform (DFT) in the processing unit 14 in order to perform the further processing in the frequency domain rather than the time domain. For example, the memory M can be realized by a circular buffer memory storing the Fourier transformed signal components. After transform into the frequency domain information present in the transformed signals can be discretized and/or compressed across frequency and magnitude axes. This process may include an appropriate filtering or convolution, for example, using erosion filtering/patches.

Further, the processing unit 14 is configured to extract/determine/identify specific patterns/characteristics present in the thus processed (compressed) signals. The specific patterns may represent particular features (for example, signal magnitudes or energies) of a waveform of the sensor signal. The determination/identification of the specific patterns may comprise a comparison of the patterns with previously stored (for example, in the memory M) reference patterns representing door opening/closing events. The reference patterns are obtained beforehand based on well-defined standardized door opening/closing events. Pattern extraction may be performed similar to a conventional feature analysis known in the context of speech recognition and may, thus, include the determination of signal magnitudes, energies, MEL spectra/cepstra etc.

Furthermore, the apparatus 10 comprises an output unit 15. In the case of determination of a door opening/closing event by the processing means 14 a corresponding notification signal is transmitted by the processing means 14 to the output unit 15. The output unit 15 may be connected to some control unit (not shown in Figure 1) that is configured to perform further actions in response to receiving an output signal from the output unit 15 that is generated by the output unit 15 in response to receiving the notification signal from the processing means 14.

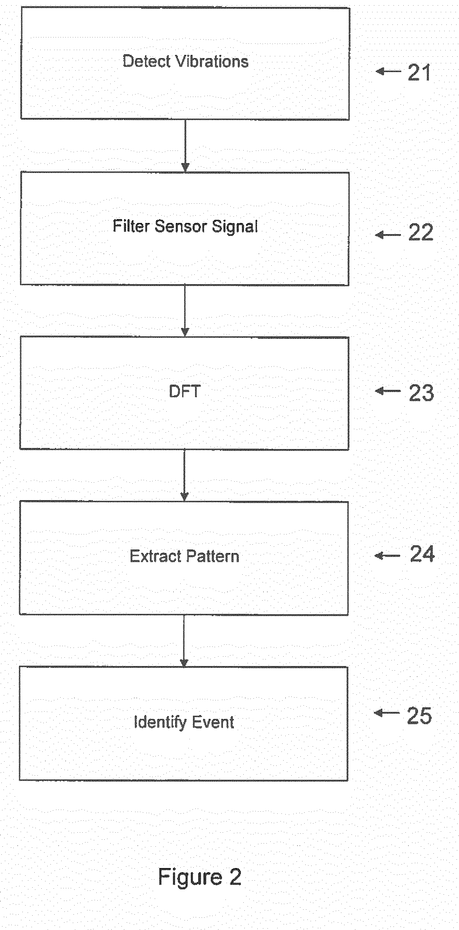

Figure 2 shows a flow chart illustrating procedural steps of a method of monitoring the opening/closing of a door of a room in accordance with an embodiment of the present invention. The method can be carried by the apparatus 10 shown in Figure 1, for example.

Vibrations of the air present in the room wherein detection of a door opening/closing event has to be performed are detected by a sensor device in step 21. The detection can be performed by a microphone, MEMS or accelerometer, for example. The detection signal obtained by the sensor device is filtered 22 in order to excise signal components that are not useful for the determination of a door opening/closing event. These useless components typically include noise. The detection signal can be a signal with a magnitude that excises some predetermined threshold. It may be foreseen that signals that are too weak, i.e., show magnitudes below some predetermined threshold are automatically rejected. The filter signal is subject to a DFT 23 and from the thus obtained discretized signal in the frequency domain a pattern is extracted 24. The extracted pattern may or may not indicate a door opening/closing event. For example, the extracted pattern is compared to one or more reference pattern that are previously obtained and known to represent opening/closing events.

Some distance measure measuring the distance between the extracted pattern and one or more of the reference patterns may be employed and a door opening/closing event may be identified 25 when the determined distance between the extracted pattern and one of the reference patterns lies below a predetermined distance threshold. Euclidean or Mahalanobis measures and varieties thereof may suitably be used. Particularly, the identification process 25 may include a Markov decision process. More particularly, the identification process 25 may be based on tracking a temporal evolution of one or more patterns extracted from the signals.

At least one of the steps of extracting a pattern 24 and identifying an event 25 of the embodiment of the method of monitoring a door locking/unlocking event may comprise and be optimized by some machine learning technology. A training process may be performed before the actual monitoring procedure. During the training process as well as the on-the-fly learning parameters, for example, parameters related to the room characteristics, may be adapted. Rejected patterns having a similarity to reference patterns below some threshold may be stored and used for the further learning process.

The above-mentioned machine learning technology may, in particular, be implemented in the form of an artificial neural network. Neural network architectures that can readily be used include

- DNN: Deep Neural Network
- CNN: Convolutional Neural Network
- Basic LSTM: Basic Long Short-Term Memory
- LSTM: Long Short-Term Memory
- GRU: Gated Recurrent Unit
- CRNN: Convolutional Recurrent Neural Network

- DS-CNN: Depthwise Separable Convolutional Neural Network

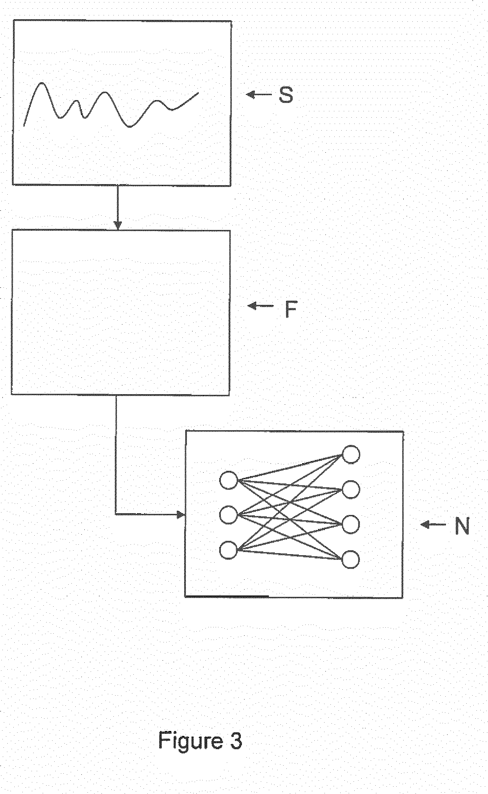

As shown in Figure 3 a sensor signal / vibration signal (vibration waveform) S is obtained by a vibration sensor device and subject to some feature extraction / pattern extraction F. The extracted information is used as an input for an artificial neural network N. The learning results, particularly, results obtained during a training phase preceding the actual in-the-field operation, are properly saved in a memory for further usage. Training/learning may be performed by employing the cross-entropy loss function or a max-pooling based loss function, for example.

The artificial neural network may be implemented in the processing unit 14 shown in Figure 1 which may comprise a microcontroller. Suitably microcontrollers include

| ArmMbed™ platform | Processor | Frequency | SRAM | Flash |
|---|---|---|---|---|
| Mbed LPC11 U24 | Cortex-M0 | 48 MHz | 8 KB | 32 KB |
| Nordic nRF51-DK | Cortex-M0 | 16 MHz | 32 KB | 256 KB |
| Mbed LPC1768 | Cortex-M3 | 96 MHz | 32 KB | 512 KB |
| Nucleo F103RB | Cortex-M3 | 72 MHz | 20 KB | 128 KB |
| Nucleo L476RG | Cortex-M4 | 80 MHz | 128 KB | 1 MB |
| Nucleo F411RE | Cortex-M4 | 100 MHz | 128 KB | 512 KB |
| FRDM-K64F | Cortex-M4 | 120 MHz | 256 KB | 1 MB |
| Nucleo F746ZG | Cortex-M7 | 216 MHz | 320 KB | 1 MB |

In principle, the identified event may be an unlocking or locking event, in particular, the event of an activation/actuation of a lock of the door form outside or inside of the room or activation of the lock by some authentication means as, for example, a key or a card. In this case, vibrations caused by the unlocking or locking of the lock are detected in step 21. In this context, it is noted that the process of identifying the event 25 may involve rejecting false positives caused by locking/unlocking events related to doors of other rooms, for example, neighbored rooms or other noise coming from outside of the monitored room. Rejecting such false positive may rely on supplemental algorithms carried out by a processing means, for example, the processing unit 14 of the apparatus shown in Figure 1, and/or some false positive reference samples that may, for example, be stored in the memory M of the apparatus shown in Figure 1.

The vibrations caused by operating a lock of a door depend on the individual lock mechanism and such vibrations are not easily identified. In order to increase the reliability of identifying actuating a lock of a door pre-processing or processing of the detected signal for extracting MEL frequencies that are used for the further processing can be performed. Particularly, a pattern may be determined based on the MEL frequencies or feature vectors derived from the MEL spectrum/cepstrum.

Particularly, the processing device may make use of an algorithm that allows to discriminate between vibrations caused by a door opening/closing/unlocking/locking event and vibrations caused by human activities. On the other, in order to keep privacy it is not desirable that the sensor device recognizes particular kinds of human activities. In order to deal with these conditions the processing unit may be configured to identify relatively strong signals at relatively high frequencies. In this context, MEL frequencies may be employed at a first processing stage for continuous frequencies and, at a second processing stage, non-contiguous frequencies are combined to determine whether the detected signal corresponds to a metallic sound that might be caused by a door lock.

The second stage may be based on but not limited to wavelet envelopes. A discrete wavelet transform can be realized by a filterbank structure that might be comprised in the pre-processing unit 12 or processing unit 14 of the apparatus 10 shown in Figure 1, for example. Feature vectors for determining patterns can be obtained in form of wavelet envelopes using the ratio of the RMS amplitude envelopes of the wavelet coefficients of the leaf nodes of a dyadic wavelet tree to the RMS amplitude of the original signal

$$F_{i,j} = \sqrt{\frac{\sum_{n_j} c_i\,(n)^2}{\sum s\,(n)^2}}$$

where $c_i(n)$ denotes the wavelet coefficients of node i and $s(n)$ is the signal to be analyzed and $F_{i,j}$ is the i element of the feature vector representing the j frame of discrete wavelet transform.

In all of the above-described embodiments of an apparatus for monitoring i) a door opening or closing event or ii) a door unlocking or locking event of a door of a room and a method of monitoring i) a door opening or closing event or ii) a door unlocking or locking event of a door of a room operation may only be started, if some operation condition is fulfilled. The operation condition may be based on a predetermined probability that any person can be present in the room at all. For example, in the hospitality context room allocation is known beforehand and information on room allocation is stored in some property management system. When a room is not booked, monitoring procedure would be reinforced and would acquire extended performance indicators. A remote system, such as a cloud component, may analyze variations of the performance indicators and induce a new set of configuration parameters to be transmitted to the apparatus.

It is, furthermore, noted that the sensor device for detecting vibrations may be supplemented by some motion sensor, for example, a radar motion sensor and/or a temperature sensor and/or a barometer and signals provided by such a motion sensor and/or temperature sensor and/or barometer can be processed in addition to and/or in combination with the signals provided by the sensor device for detecting vibrations in order to even more reliably detect the presence/absence of a person in the room and/or to corroborate the findings based on the sensor device for detecting vibrations and/or reduce any ambiguities.

Moreover, in a training phase detection of vibrations in a room known to be free of any person can be performed and the thus obtained detection results can be used in order to reduce false positives.

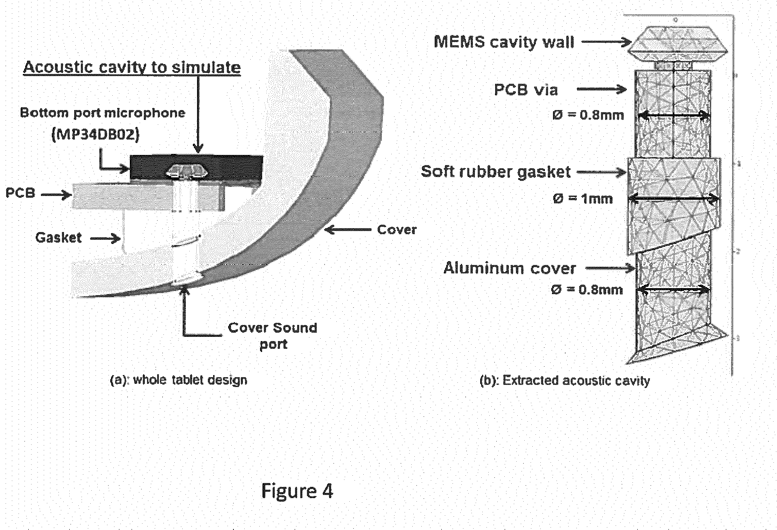

In general, the detection of vibrations is a relatively delicate task with respect to the identification of door opening/closing events while basically avoiding false positives. In order to increase the reliability the identification of events, the acoustic/resonance characteristics of the used sensor device itself might be examined in detail. Figure 4 shows an exemplary configuration of a sensor device for detecting vibrations wherein the sensor device is an MEMS comprising a microphone. The sensor device itself comprises vibrating components and exhibits an acoustic cavity influencing the detection of vibrations in the outside room.

In the example shown in Figure 4, the sensor device comprises a cover made of aluminium and exhibiting a cover sound port in form of an opening formed in the cover, a gasket, a printed circuit board (PCB) and a microphone. The acoustic cavity the characteristics of which have to be modelled to be taken into account during the detection/event identification process (for example, in steps 24 and 25 shown in the flow chart of Figure 2) depends on these components. Thus, in order to model the resonance characteristics of the sensor configuration the resonance characteristic of the individual components shown in Figure 4 can be simulated. The resonance of the entire configuration may also be measured and vibrating elements can be identified by means of a suitably designed test protocol.

All previously discussed embodiments are not intended as limitations but serve as examples illustrating features and advantages of the invention. It is to be understood that some or all of the above described features can also be combined in different ways.

**Claims**

1. An apparatus for monitoring i) a door opening or closing event or ii) a door unlocking or locking event of a door of a room, comprising
   a sensor device configured for detecting vibrations in the room and outputting a sensor signal based on the detected vibrations; and
   a processing unit configured for a) processing the sensor signal output by the sensor device comprising extracting a pattern from the sensor signal and b) identifying the i) door opening or closing event or ii) door unlocking or locking event based on the extracted pattern.

2. The apparatus according to claim 1, wherein an artificial neural network is implanted in the processing unit and the processing unit is configured to identify the i) door opening or closing event or ii) door unlocking or locking event by means of the artificial neural network.

3. The apparatus according to claim 1 or 2, wherein the artificial neural network is one of a Deep Neural Network, Convolutional Neural Network, Basic Long Short-Term Memory Network, Long Short-Term Memory Network, Gated Recurrent Unit Network, Convolutional Recurrent Neural Network and Depthwise Separable Convolutional Neural Network.

4. The apparatus according to one of the preceding claims, further comprising
   a pre-processing unit configured for pre-processing the sensor signal by filtering and amplifying the sensor signal before processing it by the processing unit.

5. The apparatus according to claim 4, wherein the pre-processing unit is further configured for transforming the sensor signal into the frequency domain, in particular, by means of a Discrete Fourier Transform.

6. The apparatus according to one of the preceding claims, wherein the processing unit is configured to process the sensor signal by convolution using erosion filtering/patches before identifying the i) door opening or closing event or ii) door unlocking or locking event based on the extracted pattern.

7. The apparatus according to one of the preceding claims, wherein the pattern is a pattern of signal magnitudes or signal energies or a MEL spectrum.

8. The apparatus according to one of the preceding claims, wherein the processing unit is configured to determine another pattern from the sensor signal, the other pattern comprising wavelet envelopes, and wherein the processing unit is configured for identifying the i) door opening or closing event or ii) door unlocking or locking event based on the extracted pattern and the other pattern.

9. Method of monitoring i) a door opening or closing event or ii) a door unlocking or locking event of a door of a room, comprising
   detecting vibrations in the room by means of a sensor device, in particular, a microphone, accelerometer or micro-electromechanical system, to obtain a sensor signal; and
   processing the sensor signal by a processing unit to identify i) a door opening or closing event or ii) a door unlocking or locking event; wherein
   processing the sensor signal comprises extracting features from the sensor signal and determining a pattern of the sensor signal based on the extracted features and wherein the i) door opening or closing event or ii) door unlocking or locking event is identified based on the determined pattern, in particular, by comparing the determined pattern with one or more pre-stored reference patterns.

10. The method according to claim 9, wherein the identifying of the i) door opening or closing event or ii) door unlocking or locking event is based on a temporal evolution of the determined pattern.

11. The method according to claim 9 or 10, wherein the i) door opening or closing event or ii) door unlocking or locking event is identified by means of an artificial neural network, in particular, one of a Deep Neural Network, Convolutional Neural Network, Basic Long Short-Term Memory Network, Long Short-Term Memory Network, Gated Recurrent Unit Network, Convolutional Recurrent Neural Network and Depthwise Separable Convolutional Neural Network.

12. The method according to one of the claims 9 to 11, further comprising at least one of filtering the sensor signal, amplifying the sensor signal and transforming the sensor signal into the frequency domain, in particular, by means of a Discrete Fourier Transform, before processing it by the processing unit.

13. The method according to one of the claims 9 to 12, further comprising processing the sensor signal by convolution using erosion filtering/patches before identifying the i) door opening or closing event or ii) door unlocking or locking event based on the determined pattern.

14. The method according to one of the claims 9 to 13, wherein the pattern is a pattern of signal magnitudes or signal energies or a MEL spectrum.

15. The method according to one of the claims 9 to 14, wherein the steps of a method according to one of the claims 9 to 14 are only performed, if a predetermined operation condition is satisfied, wherein the predetermined operation condition, particularly, represents a scheduled allocation of the room and, more particularly, non-occupation of the room.

Figure 1

Figure 2

Figure 3

Acoustic cavity to simulate

Bottom port microphone
(MP34DB02)

PCB →

Gasket →

Cover

Cover Sound
port

(a): whole tablet design

MEMS cavity wall →

PCB via →
Ø = 0.8mm

Soft rubber gasket →
Ø = 1mm

Aluminum cover →
Ø = 0.8mm

(b): Extracted acoustic cavity

Figure 4

Europäisches
Patentamt

European
Patent Office

Office européen
des brevets

# EUROPEAN SEARCH REPORT

Application Number

EP 19 30 5769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAUBRICK PETER ET AL: "Robust Audio Sensing with Multi-Sound Classification", 2019 IEEE INTERNATIONAL CONFERENCE ON PERVASIVE COMPUTING AND COMMUNICATIONS (PERCOM, IEEE, 11 March 2019 (2019-03-11), pages 1-7, XP033578764, DOI: 10.1109/PERCOM.2019.8767402 [retrieved on 2019-07-19] * abstract; figures 1,2 * * Section III. Proposed Approach * * Section IV. Experiment and Evaluation * ----- | 1-15 | INV. G06K9/00 G06K9/62 |
| X | Michel Vacher ET AL: "Complete Sound and Speech Recognition System for Health Smart Homes: Application to the Recognition of Activities of Daily Living", , 1 January 2010 (2010-01-01), pages 645-673, XP55646082, Retrieved from the Internet: URL:https://hal.archives-ouvertes.fr/hal-0 0422576/PDF/Complete_Sound_and_Speech_Reco gnition_System_for_Health_Smart_Homes-_App lication_to_the_Recognition_of_Activities_ of_Daily_Living.pdf [retrieved on 2019-11-25] * abstract * * Section 4. The AUDITHIS and RAPHAEL Systems * * Section 5. Distress Situation Detection Evaluation * * tables 5,7 * ----- | 1-15 | |

TECHNICAL FIELDS
SEARCHED      (IPC)

G06K

-/--

The present search report has been drawn up for all claims

| Place of search | Date of completion of the search | Examiner |
|---|---|---|
| The Hague | 5 December 2019 | Androulidakis, Iosif |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 19 30 5769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROSA ALSINA-PAGÈS ET AL: "homeSound: Real-Time Audio Event Detection Based on High Performance Computing for Behaviour and Surveillance Remote Monitoring", SENSORS, vol. 17, no. 4, 13 April 2017 (2017-04-13), page 854, XP55646085, DOI: 10.3390/s17040854 * abstract * * Section 1. Introduction, page 854, 2nd to last paragraph * * Section 2.1 AAL Research Projects * * Section 4. Audio Event Detection Algorithm * | 1-15 | |
| X | THILINA DISSANAYAKE ET AL: "Detecting Door Events Using a Smartphone via Active Sound Sensing", PROCEEDINGS OF THE ACM ON INTERACTIVE, MOBILE, WEARABLE AND UBIQUITOUS TECHNOLOGIES, ACM, 2 PENN PLAZA, SUITE 701NEW YORKNY10121-0701USA, vol. 2, no. 4, 27 December 2018 (2018-12-27), pages 1-26, XP058423718, DOI: 10.1145/3287038 * abstract * * Section 3. Investigation of active sound sensing * * Section 4. Method * * figures 12, 13 * | 1-15 | TECHNICAL FIELDS SEARCHED (IPC) |

The present search report has been drawn up for all claims

| Place of search | Date of completion of the search | Examiner |
|---|---|---|
| The Hague | 5 December 2019 | Androulidakis, Iosif |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)